(19) Europäisches Patentamt / European Patent Office / Office européen des brevets

(11) **EP 4 366 399 A1**

(12) **EUROPEAN PATENT APPLICATION**

(43) Date of publication:
**08.05.2024 Bulletin 2024/19**

(21) Application number: **23198157.2**

(22) Date of filing: **19.09.2023**

(51) International Patent Classification (IPC):
*H04W 52/14* (2009.01)      *H04W 52/36* (2009.01)

(52) Cooperative Patent Classification (CPC):
**H04W 52/146; H04W 52/365**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 GB 202216405**

(71) Applicant: **Nokia Technologies Oy**
**02610 Espoo (FI)**

(72) Inventors:
- **Deghel, Matha**
  **92120 Montrouge (FR)**
- **Laddu, Keeth Saliya Jayasinghe**
  **02140 Espoo (FI)**

(74) Representative: **Nokia EPO representatives**
**Nokia Technologies Oy**
**Karakaari 7**
**02610 Espoo (FI)**

(54) **POWER HEADROOM REPORT**

(57)    Disclosed is a method comprising identifying or detecting, by a terminal device, at least two simultaneous uplink transmissions from the terminal device, wherein the at least two simultaneous uplink transmissions are at least partially overlapping in time on a same cell or component carrier; generating, by the terminal device, a single power headroom report, PHR, for the at least two simultaneous uplink transmissions using one uplink transmission of the at least two simultaneous uplink transmissions; and transmitting, by the terminal device and to a network node, the single PHR.

| | |
|---|---|
| 601 | Identify or detect at least two simultaneous UL transmissions |
| 602 | Generate a single PHR for the at least two simultaneous UL transmissions |
| 603 | Report the single PHR |

FIG. 6

EP 4 366 399 A1

**Description**

FIELD

The following example embodiments relate to wireless communication.

BACKGROUND

Some wireless communication networks are capable of utilizing multiple transmission-reception point operation. It is desirable to provide solutions that enhance the overall effectiveness of such capabilities.

BRIEF DESCRIPTION

The scope of protection sought for various example embodiments is set out by the independent claims. The example embodiments and features, if any, described in this specification that do not fall under the scope of the independent claims are to be interpreted as examples useful for understanding various embodiments.

According to an aspect, there is provided an apparatus comprising at least one processor, and at least one memory storing instructions that, when executed by the at least one processor, cause the apparatus at least to: identify or detect at least two simultaneous uplink transmissions from the apparatus, wherein the at least two simultaneous uplink transmissions are at least partially overlapping in time on a same cell or component carrier; generate a single power headroom report, PHR, for the at least two simultaneous uplink transmissions using one uplink transmission of the at least two simultaneous uplink transmissions; and transmit, to a network node, the single PHR.

According to another aspect, there is provided an apparatus comprising: means for identifying or detecting at least two simultaneous uplink transmissions from the apparatus, wherein the at least two simultaneous uplink transmissions are at least partially overlapping in time on a same cell or component carrier; means for generating a single power headroom report, PHR, for the at least two simultaneous uplink transmissions using one uplink transmission of the at least two simultaneous uplink transmissions; and means for transmitting, to a network node, the single PHR.

According to another aspect, there is provided a method comprising: identifying or detecting, by a terminal device, at least two simultaneous uplink transmissions from the terminal device, wherein the at least two simultaneous uplink transmissions are at least partially overlapping in time on a same cell or component carrier; generating, by the terminal device, a single power headroom report, PHR, for the at least two simultaneous uplink transmissions using one uplink transmission of the at least two simultaneous uplink transmissions; and transmitting, by the terminal device and to a network node, the single PHR.

According to another aspect, there is provided a computer program comprising instructions that, when executed by an apparatus, cause the apparatus to perform at least the following: identifying or detecting at least two simultaneous uplink transmissions from the apparatus, wherein the at least two simultaneous uplink transmissions are at least partially overlapping in time on a same cell or component carrier; generating a single power headroom report, PHR, for the at least two simultaneous uplink transmissions using one uplink transmission of the at least two simultaneous uplink transmissions; and transmitting, to a network node, the single PHR.

According to another aspect, there is provided a computer readable medium comprising program instructions that, when executed by an apparatus, cause the apparatus to perform at least the following: identifying or detecting at least two simultaneous uplink transmissions from the apparatus, wherein the at least two simultaneous uplink transmissions are at least partially overlapping in time on a same cell or component carrier; generating a single power headroom report, PHR, for the at least two simultaneous uplink transmissions using one uplink transmission of the at least two simultaneous uplink transmissions; and transmitting, to a network node, the single PHR.

According to another aspect, there is provided a non-transitory computer readable medium comprising program instructions that, when executed by an apparatus, cause the apparatus to perform at least the following: identifying or detecting at least two simultaneous uplink transmissions from the apparatus, wherein the at least two simultaneous uplink transmissions are at least partially overlapping in time on a same cell or component carrier; generating a single power headroom report, PHR, for the at least two simultaneous uplink transmissions using one uplink transmission of the at least two simultaneous uplink transmissions; and transmitting, to a network node, the single PHR.

According to another aspect, there is provided an apparatus comprising at least one processor, and at least one memory storing instructions that, when executed by the at least one processor, cause the apparatus at least to: transmit, to a terminal device, information for scheduling at least two simultaneous uplink transmissions from the terminal device, wherein the at least two simultaneous uplink transmissions are at least partially overlapping in time on a same cell or component carrier; and receive, from the terminal device, a power headroom report, PHR, for the at least two simultaneous uplink transmissions, wherein the single PHR is generated by the terminal device using one uplink transmission of the at least two simultaneous uplink transmissions.

According to another aspect, there is provided an apparatus comprising: means for transmitting, to a terminal device, information for scheduling at least two simultaneous uplink transmissions from the terminal device, wherein the at least two simultaneous uplink transmissions are at least partially overlapping in time on a same cell or component carrier; and means for receiving, from the terminal device, a power headroom report, PHR, for the at least two simultaneous uplink transmissions, wherein the single PHR is generated by the terminal device using one uplink transmission of the at least two simultaneous uplink transmissions.

According to another aspect, there is provided a method comprising: transmitting, by a network node and to a terminal device, information for scheduling at least two simultaneous uplink transmissions from the terminal device, wherein the at least two simultaneous uplink transmissions are at least partially overlapping in time on a same cell or component carrier; and receiving, by the network node and from the terminal device, a power headroom report, PHR, for the at least two simultaneous uplink transmissions, wherein the single PHR is generated by the terminal device using one uplink transmission of the at least two simultaneous uplink transmissions.

According to another aspect, there is provided a computer program comprising instructions that, when executed by an apparatus, cause the apparatus to perform at least the following: transmitting, to a terminal device, information for scheduling at least two simultaneous uplink transmissions from the terminal device, wherein the at least two simultaneous uplink transmissions are at least partially overlapping in time on a same cell or component carrier; and receiving, from the terminal device, a power headroom report, PHR, for the at least two simultaneous uplink transmissions, wherein the single PHR is generated by the terminal device using one uplink transmission of the at least two simultaneous uplink transmissions.

According to another aspect, there is provided a computer readable medium comprising program instructions that, when executed by an apparatus, cause the apparatus to perform at least the following: transmitting, to a terminal device, information for scheduling at least two simultaneous uplink transmissions from the terminal device, wherein the at least two simultaneous uplink transmissions are at least partially overlapping in time on a same cell or component carrier; and receiving, from the terminal device, a power headroom report, PHR, for the at least two simultaneous uplink transmissions, wherein the single PHR is generated by the terminal device using one uplink transmission of the at least two simultaneous uplink transmissions.

According to another aspect, there is provided a non-transitory computer readable medium comprising program instructions that, when executed by an apparatus, cause the apparatus to perform at least the following: transmitting, to a terminal device, information for scheduling at least two simultaneous uplink transmissions from the terminal device, wherein the at least two simultaneous uplink transmissions are at least partially overlapping in time on a same cell or component carrier; and receiving, from the terminal device, a power headroom report, PHR, for the at least two simultaneous uplink transmissions, wherein the single PHR is generated by the terminal device using one uplink transmission of the at least two simultaneous uplink transmissions.

LIST OF DRAWINGS

In the following, various example embodiments will be described in greater detail with reference to the accompanying drawings, in which

FIG. 1A illustrates an example of a cellular communication network;
FIG. 1B illustrates an example of a system;
FIG. 2 illustrates a signaling diagram;
FIG. 3 illustrates a signaling diagram;
FIG. 4 illustrates a signaling diagram;
FIG. 5 illustrates a signaling diagram;
FIG. 6 illustrates a flow chart;
FIG. 7 illustrates a flow chart;
FIG. 8 illustrates an example of determining which uplink transmission to use for generating a single power headroom report;
FIG. 9 illustrates an example of a terminal device indicating which uplink transmission has been used for generating the single power headroom report;
FIG. 10 illustrates an example of an apparatus; and
FIG. 11 illustrates an example of an apparatus.

DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

In the following, different example embodiments will be described using, as an example of an access architecture to which the example embodiments may be applied, a radio access architecture based on long term evolution advanced (LTE Advanced, LTE-A), new radio (NR, 5G), beyond 5G, or sixth generation (6G) without restricting the example embodiments to such an architecture, however. It is obvious for a person skilled in the art that the example embodiments may also be applied to other kinds of communications networks having suitable means by adjusting parameters and procedures appropriately. Some examples of other options for suitable systems may be the universal mobile telecommunications system (UMTS) radio access network (UTRAN or E-UTRAN), long term evolution (LTE, substantially the same as E-UTRA), wireless local area network (WLAN or Wi-Fi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

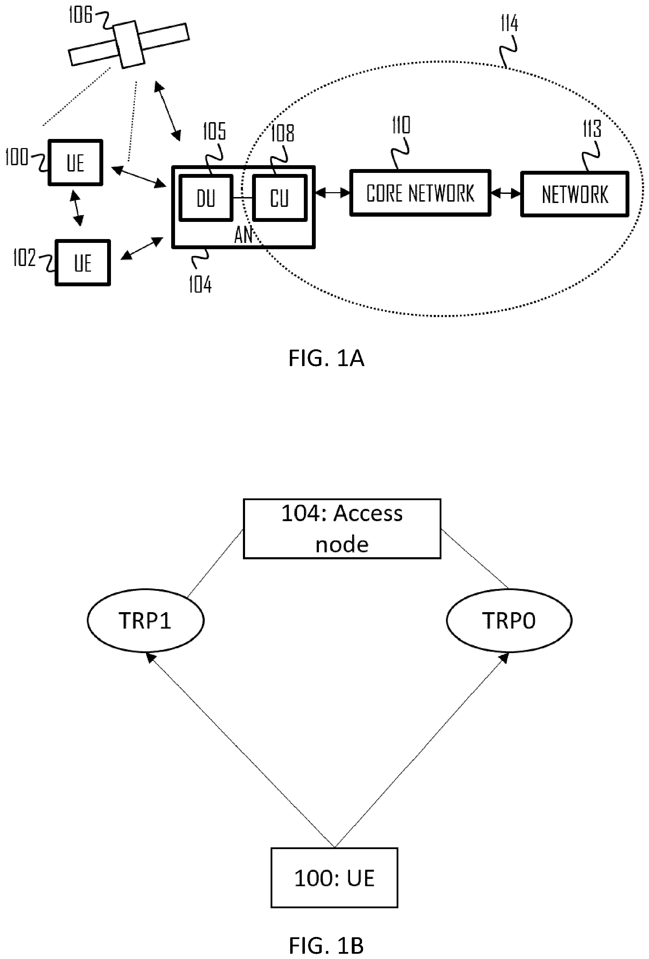

FIG. 1A depicts examples of simplified system architectures showing some elements and functional entities, all being logical units, whose implementation may differ from what is shown. The connections shown in FIG. 1A are logical connections; the actual physical connections may be different. It is apparent to a person skilled in the art that the system may also comprise other functions and structures than those shown in FIG. 1A.

The example embodiments are not, however, restricted to the system given as an example but a person skilled in the art may apply the solution to other communication systems provided with necessary properties.

The example of FIG. 1A shows a part of an exemplifying radio access network.

FIG. 1A shows user devices 100 and 102 configured to be in a wireless connection on one or more communication channels in a radio cell with an access node (AN) 104, such as an evolved Node B (abbreviated as eNB or eNodeB) or a next generation Node B (abbreviated as gNB or gNodeB), providing the radio cell. The physical link from a user device to an access node may be called uplink (UL) or reverse link, and the physical link from the access node to the user device may be called downlink (DL) or forward link. A user device may also communicate directly with another user device via sidelink (SL) communication. It should be appreciated that access nodes or their functionalities may be implemented by using any node, host, server or access point etc. entity suitable for such a usage.

A communication system may comprise more than one access node, in which case the access nodes may also be configured to communicate with one another over links, wired or wireless, designed for the purpose. These links may be used for signaling purposes and also for routing data from one access node to another. The access node may be a computing device configured to control the radio resources of communication system it is coupled to. The access node may also be referred to as a base station, a base transceiver station (BTS), an access point or any other type of interfacing device including a relay station capable of operating in a wireless environment. The access node may include or be coupled to transceivers. From the transceivers of the access node, a connection may be provided to an antenna unit that establishes bi-directional radio links to user devices. The antenna unit may comprise a plurality of antennas or antenna elements. The access node may further be connected to a core network 110 (CN or next generation core NGC). Depending on the deployed technology, the counterpart that the access node may be connected to on the CN side may be a serving gateway (S-GW, routing and forwarding user data packets), packet data network gateway (P-GW) for providing connectivity of user devices to external packet data networks, user plane function (UPF), mobility management entity (MME), or an access and mobility management function (AMF), etc.

The user device illustrates one type of an apparatus to which resources on the air interface may be allocated and assigned, and thus any feature described herein with a user device may be implemented with a corresponding apparatus, such as a relay node.

An example of such a relay node may be a layer 3 relay (self-backhauling relay) towards the access node. The self-backhauling relay node may also be called an integrated access and backhaul (IAB) node. The IAB node may comprise two logical parts: a mobile termination (MT) part, which takes care of the backhaul link(s) (i.e., link(s) between IAB node and a donor node, also known as a parent node) and a distributed unit (DU) part, which takes care of the access link(s), i.e., child link(s) between the IAB node and user device(s), and/or between the IAB node and other IAB nodes (multi-hop scenario).

Another example of such a relay node may be a layer 1 relay called a repeater. The repeater may amplify a signal received from an access node and forward it to a user device, and/or amplify a signal received from the user device and forward it to the access node.

The user device may also be called a subscriber unit, mobile station, remote terminal, access terminal, user terminal, terminal device, or user equipment (UE) just to mention but a few names or apparatuses. The user device may refer to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, multimedia device, reduced capability (RedCap) device, wireless sensor device, or any device integrated in a vehicle.

It should be appreciated that a user device may also be a nearly exclusive uplink-only device, of which an example may be a camera or video camera loading images or video clips to a network. A user device may also be a device having capability to operate in Internet of Things (IoT) network which is a scenario in which objects may be provided with the ability to transfer data over a network without requiring human-to-human or human-to-computer interaction. The user device may also utilize cloud. In some applications, a user device may comprise a small portable or wearable device with radio parts (such as a watch, earphones or eyeglasses) and the computation may be carried out in the cloud or in another user device. The user device (or in some example embodiments a layer 3 relay node) may be configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question may have inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1A) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications may support a wide range of use cases and related applications including video streaming, augmented reality, different ways of data sharing and various forms of machine type applications (such as (massive) machine-type communications (mMTC), including vehicular safety, different sensors and real-time control. 5G may have multiple radio interfaces, namely below 6GHz, cmWave and mmWave, and also being integrable with existing legacy radio access technologies, such as the LTE. Integration with the LTE may be implemented, at least in the early phase, as a system, where macro coverage may be provided by the LTE, and 5G radio interface access may come from small cells by aggregation to the LTE. In other words, 5G may support both inter-RAT operability (such as LTE-5G) and inter-RI operability (inter-radio interface operability, such as below 6GHz - cmWave - mmWave). One of the concepts considered to be used in 5G networks may be network slicing, in which multiple independent and dedicated virtual sub-networks (network instances) may be created within the substantially same infrastructure to run services that have different requirements on latency, reliability, throughput and mobility.

The current architecture in LTE networks may be fully distributed in the radio and fully centralized in the core network. The low latency applications and services in 5G may need to bring the content close to the radio which leads to local break out and multi-access edge computing (MEC). 5G may enable analytics and knowledge generation to occur at the source of the data. This approach may need leveraging resources that may not be continuously connected to a network such as laptops, smartphones, tablets and sensors. MEC may provide a distributed computing environment for application and service hosting. It may also have the ability to store and process content in close proximity to cellular subscribers for faster response time. Edge computing may cover a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system may also be able to communicate with one or more other networks 113, such as a public switched telephone network or the Internet, or utilize services provided by them. The communication network may also be able to support the usage of cloud services, for example at least part of core network operations may be carried out as a cloud service (this is depicted in FIG. 1A by "cloud" 114). The communication system may also comprise a central control entity, or the like, providing facilities for networks of different operators to cooperate for example in spectrum sharing.

An access node may also be split into: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such a split may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be defined as a logical node hosting higher layer protocols, such as radio resource control (RRC), service data adaptation protocol (SDAP) and/or packet data convergence protocol (PDCP), of the access node. The DU 105 may be defined as a logical node hosting radio link control (RLC), medium access control (MAC) and/or physical (PHY) layers of the access node. The operation of the DU may be at least partly controlled by the CU. The CU may comprise a control plane (CU-CP), which may be defined as a logical node hosting the RRC and the control plane part of the PDCP protocol of the CU for the access node. The CU may further comprise a user plane (CU-UP), which may be defined as a logical node hosting the user plane part of the PDCP protocol and the SDAP protocol of the CU for the access node.

Cloud computing platforms may also be used to run the CU 108 and/or DU 105. The CU may run in a cloud computing platform, which may be referred to as a virtualized CU (vCU). In addition to the vCU, there may also be a virtualized DU (vDU) running in a cloud computing platform. Furthermore, there may also be a combination, where the DU may use so-called bare metal solutions, for example application-specific integrated circuit (ASIC) or customer-specific standard product (CSSP) system-on-a-chip (SoC) solutions. It should also be understood that the distribution of functions between the above-mentioned access node units, or different core network operations and access node operations, may differ.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head (RRH) or a radio unit (RU), or an access node comprising radio parts. It is also possible that node operations may be distributed among a plurality of servers, nodes or hosts. Application of cloudRAN architecture enables RAN real-time functions being carried out at the RAN side (e.g., in a DU 105) and non-real-time functions being carried out in a centralized manner (e.g., in a CU 108).

It should also be understood that the distribution of functions between core network operations and access node operations may differ from that of the LTE or even be non-existent. Some other technology advancements that may be used include big data and all-IP, which may change the way networks are being constructed and managed. 5G (or new radio, NR) networks may be designed to support multiple hierarchies, where MEC servers may be placed between the core and the access node. It should be appreciated that MEC may be applied in 4G networks as well.

5G may also utilize non-terrestrial communication, for example satellite communication, to enhance or complement the coverage of 5G service, for example by providing backhauling. Possible use cases may be providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). A given satellite 106 in the mega-constellation may cover several satellite-enabled network entities that create on-ground cells. The on-ground cells may be created through an on-ground relay node or by an access node 104 located on-ground or in a satellite.

6G networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

It is obvious for a person skilled in the art that the depicted system is only an example of a part of a radio access system and in practice, the system may comprise a plurality of access nodes, the user device may have access to a plurality of radio cells and the system may also comprise other apparatuses, such as physical layer relay nodes or other network elements, etc. At least one of the access nodes may be a Home eNodeB or a Home gNodeB.

Additionally, in a geographical area of a radio communication system, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) of FIG. 1A may provide any kind of these cells. A cellular radio system may be implemented as a multilayer network including several kinds of radio cells. In multilayer networks, one access node may provide one kind of a radio cell or radio cells, and thus a plurality of access nodes may be needed to provide such a network structure.

For fulfilling the need for improving the deployment and performance of communication systems, the concept of "plug-and-play" access nodes may be introduced. A network which may be able to use "plug-and-play" access nodes, may include, in addition to Home eNodeBs or Home gNodeBs, a Home Node B gateway, or HNB-GW (not shown in FIG. 1A). An HNB-GW, which may be installed within an operator's network, may aggregate traffic from a large number of Home eNodeBs or Home gNodeBs back to a core network.

The network (for example the network illustrated in FIG. 1A) may support utilizing multiple transmission-reception points (TRPs). This may be referred to as multiple transmission-reception point (mTRP) operation. mTRP operation may support, for example, two or more TRPs. Thus, for example, the UE 100 may receive data and/or transmit data via a plurality of TRPs. The different TRPs may be controlled, for example, by the access node 104, such as a gNB.

An example of such a system is illustrated in FIG. 1B, which may be understood to depict the system of FIG. 1A, but with greater accuracy with respect to the mTRP scenario. In mTRP operation, a given TRP may be identified by a TRP identifier (ID). Alternatively, the mTRP operation may be implemented in such a manner that, instead of explicitly indicating the TRP ID, control resource sets (CORESETs) may be associated to specific TRPs using a CORESETPoolIndex parameter (e.g., a value of 0 or 1). CORESETs within a physical downlink control channel (PDCCH) configuration that have the same CORESETPoolIndex may be assumed by the UE to be configured to be provided from the same (set of) TRP(s).

Referring to FIG. 1B, two TRPs with CORESETPoolIndex 0 and 1 are shown. The UE 100 may transmit a first uplink transmission to TRP0 (i.e., the TRP associated with CORESETPoolIndex 0), and a second uplink transmission to TRP1 (i.e., the TRP associated with CORESETPoolIndex 1), wherein the first uplink transmission and the second uplink transmission may be transmitted simultaneously, or they may overlap at least partially in time.

The UE may transmit the first uplink transmission and the second uplink transmission from different antenna panels of the UE. A given UE antenna panel may be identified by an index of a corresponding UE capability value set or by an antenna panel identifier (ID). Alternatively, or additionally, a given UE antenna panel may be identified or associated by at least one reference signal (e.g., DL reference signal) or by an UL beam.

Herein mTRP operation may refer to single downlink control information (S-DCI) or multiple downlink control information (mDCI) operation. In mDCI operation, the CORESETPoolIndex value may be used to group CORESETs under separate groups. In other words, when CORESETs share the same group ID or CORESETPoolindex value, they may be considered to be in the same group. In S-DCI operation, the different CORESETs may or may not be grouped, i.e., the same CORESETpoolindex value may be configured or assumed for all the CORESETs; alternatively, no CORESETPoolIndex may be configured in this case. When configured with more than one value of CORESETPoolIndex (for example two sets of CORESETs are configured in mDCI operation), the UE may be expected to monitor downlink control information (DCI) transmissions simultaneously from CORESETs associated with different CORESETPoolIndex values. Currently, up to two values (k = 0,1) may be configured.

In NR Release 17, single-DCI mTRP time-division duplexing (TDM) physical uplink control channel (PUCCH) repetition operation in frequency range two (FR2) may involve use of one PUCCH resource, and activation of two spatial relation infos for a PUCCH resource via MAC control element (MAC CE).

A power headroom report (PHR) is a type of MAC control element (CE) that may be used to report the power headroom available at the UE. The power headroom indicates how much transmit power is left for the UE to use in addition to the power being used by its current transmission. The power headroom may be calculated as follows:

$$\text{Power Headroom} = P_{max} - P_{pusch}$$

where $P_{max}$ is the UE's maximum transmit power (nominal power) or maximum output power, and $P_{pusch}$ is the UE's current transmit power (estimated power).

If the power headroom value is positive (>0), it indicates that the UE still has some space under the maximum power. If the power headroom value is negative (<0), it indicates that the UE's current transmit power is already greater than what it is allowed to transmit.

Currently, two PHRs may be calculated and reported, wherein a given PHR is associated with a first PUSCH occasion to a given TRP. This two-PHR reporting may be RRC configured. If not configured, the UE may report one PHR. Several conditions may be defined to determine whether the second PHR should be an actual or virtual PHR (e.g., depending on the first PHR).

NR Release 17 introduces a unified transmission configuration indicator (TCI) framework. The unified TCI framework means that TCI states, which have been used to provide quasi-co-location (QCL) assumptions for the reception of DL signals and channels, may also be used to provide spatial sources for the transmission of UL signals and channels.

Furthermore, the unified TCI framework defines the concept of "indicated TCI state". The indicated TCI state may be a joint DL and UL TCI state, or a separate DL TCI state and a separate UL TCI state. The indicated TCI state provides a QCL source for the set of DL signals and channels, and a spatial source for the set of UL signals and channels. In NR Rel-17, there can be one indicated joint DL and UL TCI state for the UE, or one indicated DL TCI state and one indicated UL TCI state for the UE.

The unified TCI framework may comprise the following functionalities:

- A common TCI state (a.k.a. indicated TCI) for a set of signals and channels at a time.
- The TCI state can be a joint DL and UL TCI state, or a separate DL TCI state and a separate UL TCI state.
- RRC configures a set (or pool) of joint and/or separate TCI states.
- MAC activates a number (e.g., 8) of joint and/or separate TCI states.
- Before first indication, the first activated TCI state is the current indicated TCI state.
- DCI indicates one of the activated TCI states to be the indicated TCI state (which may be a common TCI state).

On the DCI-based TCI state indication, DCI format 1_1 or 1_2 with and without DL assignment may be used to carry the TCI state indication. The indication may be confirmed by a hybrid automatic repeat request (HARQ) acknowledgement (ACK) by the UE. The application time of the beam indication may be the first slot that is at least X ms or Y symbols after the last symbol of the acknowledgment of the joint or separate DL/UL beam indication, where X>0 and Y>0.

The TCI field codepoint may comprise a joint TCI state for both DL and UL. Alternatively, the TCI field codepoint for the case of separate DL and UL TCI states may comprise a pair of a DL TCI state and a UL TCI state, or a DL TCI state (keep the current UL TCI state), or a UL TCI state (keep the current DL TCI state).

For NR Release 18, there is an objective to specify the support of simultaneous UL transmissions at least considering the space-division multiplexing (SDM) and single frequency network (SFN) scheme of single-DCI based STxMP PUSCH and considering the multi-DCI based STxMP PUSCH (i.e., multi-DCI mode). STxMP is an abbreviation for simultaneous transmission across multiple panels. In addition, there is an objective to specify an extension of the NR Release 17 unified TCI framework for indication of multiple DL and UL TCI states focusing on the mTRP use cases, using the NR Release 17 unified TCI framework as a baseline.

In the SDM scheme, different layers or demodulation reference signal (DMRS) ports of one PUSCH are separately precoded and transmitted from different UE antenna panels simultaneously.

In the SFN-based transmission scheme, all of the same layers or DMRS ports of one PUSCH are transmitted from two different UE antenna panels simultaneously.

Considering the NR Release 18 scope, simultaneous UL transmissions may be supported, where two UL transmissions overlap at least partially in time (and may or may not overlap in frequency). There is a challenge to determine what enhancements are needed for PHR operation for the cases, where two-PHR mode would not be configured, i.e., when the UE is required to report just one PHR for a given cell or component carrier (CC).

Some example embodiments may enable PHR operation, when two-PHR mode is not configured in a cell, i.e., when a single PHR is to be reported for example for simultaneous UL (e.g., PUSCH) transmissions (or UL transmissions overlapping at least partially in time). More specifically, some example embodiments may allow determining and/or indicating which UL (e.g., PUSCH) transmission to use for the PHR calculation. Some example embodiments may be applicable for actual UL/PUSCH transmissions as well as for virtual/reference UL/PUSCH transmissions, i.e., when the reported PHR is a real/actual PHR or a virtual PHR, respectively.

Some example embodiments may be applied, for example, to a UE supporting or configured with STxMP operation and/or mTRP UL schemes (e.g., based on the configuration of at least one of UL SDM or SFN schemes), and not configured with reporting two PHRs in a given cell/CC (i.e., configured with one PHR reporting). In some example embodiments, for two UL transmissions, such as two PUSCHs, starting at the same time or at least partially overlapping in time, or for one or two reference UL/PUSCH transmissions (i.e., not actual UL/PUSCH transmissions), the UE may determine or be indicated/configured which PUSCH transmission to consider/use for the calculation of the PHR.

Some example embodiments are described below using principles and terminology of 5G technology without limiting the example embodiments to 5G communication systems, however.

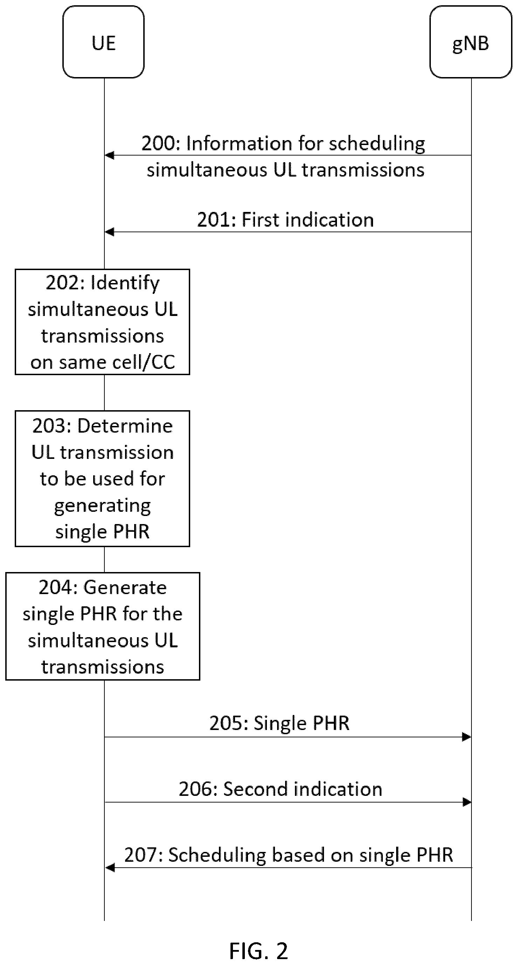

FIG. 2 illustrates a signaling diagram according to an example embodiment.

Referring to FIG. 2, in block 200, a network node (e.g., gNB) of a radio access network may transmit, to a terminal device, information for scheduling at least two simultaneous uplink transmissions from the terminal device, wherein the at least two simultaneous uplink transmissions are at least partially overlapping in time on a same cell or component carrier of the network node. Herein an uplink transmission may refer to, for example, a physical uplink shared channel (PUSCH) transmission, a physical uplink control channel (PUCCH) transmission, or any other uplink transmission.

The terminal device may correspond to the UE 100 of FIG. 1A or FIG. 1B. The network node may correspond to the access node 104 of FIG. 1A or FIG. 1B.

In block 201, the network node may provide or transmit a first indication to the terminal device. The first indication may be provided by the network node to instruct the terminal device on which uplink transmission to use for generating a single PHR for the at least two simultaneous uplink transmissions. The first indication may indicate one or more of the following: one uplink transmission of the at least two simultaneous uplink transmissions to be used for generating a single power headroom report (PHR) for the at least two simultaneous uplink transmissions, a rule to be used for determining the one uplink transmission, or an index or identifier associated with the one uplink transmission.

For example, the first indication may be carried to the terminal device via RRC, MAC CE, and/or DCI, through existing/reserved or new field(s) or bit(s).

The index or identifier may relate to corresponding scheduling information of the one uplink transmission to be used for generating the single PHR. For example, the index or identifier may comprise one or more of the following: a control resource set (CORESET) pool index (CORESETPoolIndex), a capability value set index, a CORESET group index, a TCI state index, a TCI state, a TCI state group index, a pathloss reference signal index, a downlink reference signal group index, an antenna panel identifier, a transmission-reception point (TRP) identifier, a sounding reference signal (SRS) resource set index (or indicator), an SRS resource set, an SRS resource indicator (SRI), or a physical cell identity (PCI).

In block 202, the terminal device identifies or detects the at least two simultaneous uplink transmissions from the terminal device, wherein the at least two uplink transmissions are at least partially overlapping in time on a same cell or component carrier of the network node. In other words, the at least two uplink transmissions may be partially or fully overlapping in time.

In block 203, the terminal device determines the one uplink transmission of the at least two simultaneous uplink transmissions to be used for generating the single PHR for the at least two simultaneous uplink transmissions.

The one uplink transmission may be determined based on the first indication. Alternatively, the one uplink transmission may be determined autonomously by the terminal device based on its implementation (i.e., without the first indication).

The one uplink transmission to be used for generating the single PHR may be determined based on an association of the one uplink transmission to the index or the identifier (e.g., indicated in the first indication).

For example, the terminal device may be indicated or configured to use the PUSCH transmission corresponding to or associated with a given CORESETPoolIndex or capability value set index or CORESET group or TCI state or TCI state group or pathloss reference signal or downlink reference signal group or antenna panel identifier or TRP identifier or SRS resource set or SRI or PCI provided in the first indication by the network node.

Alternatively, or additionally, the one uplink transmission to be used for generating the single PHR may be determined based on a rule indicating one or more of the following: using the one uplink transmission based on the one uplink transmission being associated with a higher index or identifier than one or more indices or identifiers associated with one or more other uplink transmissions, for example all the other uplink transmission(s), of the at least two simultaneous uplink transmissions; using the one uplink transmission based on the one uplink transmission being associated with a lower index or identifier than the one or more indices or identifiers associated with the one or more other uplink transmissions of the at least two simultaneous uplink transmissions; using the one uplink transmission based on the one uplink transmission being associated with a larger parameter than one or more parameters associated with the one or more other uplink transmissions of the at least two simultaneous uplink transmissions; using the one uplink transmission based on the one uplink transmission being associated with a smaller parameter than the one or more parameters associated with the one or more other uplink transmissions of the at least two simultaneous uplink transmissions; using the one uplink transmission based on the one uplink transmission being associated with an earlier starting time than one or more starting times associated with the one or more other uplink transmissions of the at least two simultaneous uplink transmissions; using the one uplink transmission based on the one uplink transmission being associated with a later starting time than the one or more starting times associated with the one or more other uplink transmissions of the at least two simultaneous uplink transmissions; using the one uplink transmission based on the one uplink transmission being associated with a larger power headroom value than one or more power headroom values associated with the one or more other uplink transmissions of the at least two simultaneous uplink transmissions; using the one uplink transmission based on the one uplink transmission being associated with a smaller power headroom value than the one or more power headroom values associated with the one or more other uplink transmissions of the at least two simultaneous uplink transmissions; using the one uplink transmission based on the one uplink transmission corresponding to a first indicated transmission configuration indicator (TCI) state of two indicated TCI states; using the one uplink transmission based on the one uplink transmission corresponding to a second indicated TCI state of the two indicated TCI states; using the one uplink transmission based on the one uplink transmission corresponding to a TCI state corresponding to a lower index or identifier than one or more indices or identifiers corresponding to one or more other TCI states corresponding to the one or more other uplink transmissions of the at least two simultaneous uplink transmissions; or using the one uplink transmission based on the one uplink transmission corresponding to a TCI state corresponding to a higher index or identifier than the one or more indices or identifiers corresponding to the one or more other TCI states corresponding to the one or more other uplink transmissions of the at least two simultaneous uplink transmissions.

The index or identifier associated with the one uplink transmission may comprise one or more of the following: a first control resource set (CORESET) pool index, a first capability value set index, a first CORESET group index, a first TCI state index, a first TCI state, a first TCI state group index, a first pathloss reference signal index, a first downlink reference signal group index, a first antenna panel identifier, a first transmission-reception point, TRP, identifier, a first sounding reference signal (SRS) resource set index, a first SRS resource set, a first SRS resource indicator (SRI), or a first physical cell identity (PCI).

An index or identifier of the one or more indices or identifiers associated with the one or more other uplink transmissions may comprise one or more of the following: a second CORESET pool index, a second capability value set index, a second CORESET group index, a second TCI state index, a second TCI state, a second TCI state group index, a second pathloss reference signal index, a second downlink reference signal group index, a second antenna panel identifier, a second TRP identifier, a second SRS resource set index, a second SRS resource set, a second SRI, or a second PCI.

The index or identifier associated with the one uplink transmission and the index or identifier associated with the one or more other uplink transmissions may be of the same type. For example, if the index or identifier associated with the one uplink transmission comprises the first CORESET pool index, then the index or identifier associated with the one or more other uplink transmissions may comprise the second CORESET pool index.

The parameter associated with the one uplink transmission may indicate one or more of the following: a first modulation coding scheme (MCS), a first frequency domain allocation, a first maximum power reduction (MPR), a first maximum permissible exposure (MPE), a first number of resource elements, or a first transmission power.

A parameter of the one or more parameters associated with the one or more other uplink transmissions may indicate one or more of the following: a second MCS, a second frequency domain allocation, a second MPR, a second MPE, a second number of resource elements, or a second transmission power.

The parameter associated with the one uplink transmission and the parameter associated with the one or more other uplink transmissions may be of the same type. For example, if the parameter associated with the one uplink transmission indicates the first MCS, then the parameter associated with the one or more other uplink transmissions may indicate the second MCS.

The rule may be indicated in the first indication, or the rule may be pre-defined (pre-configured) at the terminal device or provided as part of the specifications.

As an example of a rule, the terminal device may be configured or indicated to use the PUSCH transmission corresponding to or associated with a lower CORESETPoolIndex or capability value set index or CORESET group index or TCI state index or TCI state group index or pathloss reference signal index or downlink reference signal group index (e.g., including SSB and/or CSI-RS) or antenna panel identifier or TRP identifier or SRS resource set or PCI compared to that of the other PUSCH transmission(s) of the at least two simultaneous uplink transmissions.

As another example of a rule, the terminal device may be configured or indicated to use the PUSCH transmission corresponding to or associated with a higher CORESETPoolIndex or capability value set index or CORESET group index or TCI state index or TCI state group index or pathloss reference signal index or downlink reference signal group index (e.g., including SSB and/or CSI-RS) or antenna panel identifier or TRP identifier or SRS resource set or PCI compared to that of the other simultaneous PUSCH transmission(s).

As another example of a rule, the terminal device may be configured or indicated to use the PUSCH transmission with a higher MCS and/or larger frequency domain allocation, or the PUSCH transmission with larger MPR or MPE compared to that of the other simultaneous PUSCH transmission(s).

As another example of a rule, the terminal device may be configured or indicated to use the PUSCH transmission with a lower MCS and/or smaller frequency domain allocation, or the PUSCH transmission with a smaller MPR or MPE compared to that of the other simultaneous PUSCH transmission(s).

As another example of a rule, the terminal device may be configured or indicated to calculate two power headroom values, each corresponding to one PUSCH transmission, and report the larger power headroom value of the two power headroom values.

As another example of a rule, the terminal device may be configured or indicated to calculate two power headroom values, each corresponding to one PUSCH transmission, and report the smaller power headroom value of the two power headroom values.

As another example of a rule, in case one PUSCH transmission starts before the other PUSCH transmission(s), the terminal device may be configured or indicated to calculate and report the PHR for the PUSCH transmission starting earlier in time.

As another example of a rule, in case one PUSCH transmission starts before the other PUSCH transmission(s), the terminal device may be configured or indicated to calculate and report the PHR for the PUSCH transmission starting later in time.

As another example of a rule, if one PUSCH transmission of two PUSCH transmissions is an actual transmission, and the other PUSCH transmission is a reference transmission, the terminal device may be configured or indicated to use the actual PUSCH transmission for the PHR calculation.

As another example of a rule, if one PUSCH transmission of two PUSCH transmissions is an actual transmission, and the other PUSCH transmission is a reference transmission, the terminal device may be configured or indicated to use the reference transmission for the PHR calculation.

As another example of a rule, in case of two indicated/applicable TCI states, the terminal device may be configured or indicated to use the PUSCH transmission corresponding to the first indicated TCI state. Alternatively, the terminal device may be configured or indicated to use the PUSCH transmission corresponding to the TCI state corresponding to the lower CORESETPoolIndex or lower SRS resource set index or lower TCI state index.

As another example of a rule, in case of two indicated/applicable TCI states, the terminal device may be configured or indicated to use the PUSCH transmission corresponding to the second indicated TCI state. Alternatively, the terminal device may be configured or indicated to use the PUSCH transmission corresponding to the TCI state corresponding to the higher CORESETPoolIndex or higher SRS resource set index or higher TCI state index.

As another example of a rule, the terminal device may be configured or indicated to use both PUSCH transmissions for calculating the single PHR.

In block 204, the terminal device generates the single PHR for the at least two simultaneous uplink transmissions using the determined one uplink transmission of the at least two simultaneous uplink transmissions.

Using the one uplink transmission may comprise using one or more power control parameters associated with the one uplink transmission. For example, using a certain PUSCH transmission for calculating a PHR may comprise using the power control parameters, such as open loop and closed loop power control parameters and pathloss reference signal, corresponding to this PUSCH transmission, or more specifically the power control parameters corresponding to or associated with the TCI state or SRI or SRS resource(s) corresponding to or applicable/indicated to this PUSCH transmission, or associated with the CORESETPoolIndex or CORESET group or SRS resource set corresponding to this PUSCH transmission. Additionally, or alternatively, using a certain PUSCH transmission for calculating a PHR may comprise using the power control parameters, including default power control parameters, corresponding to the CORESETPoolIndex or capability value set index or CORESET group index or TCI state index or TCI state group index or pathloss reference signal index or downlink reference signal group index or antenna panel identifier or TRP identifier etc. corresponding to or associated with the PUSCH transmission.

In case default power control parameter(s) should be used, such as open loop or closed-loop power control parameters or pathloss reference signal, the terminal device may use the default power control parameters associated with or corresponding to a PUSCH transmission or CORESETPoolIndex or SRS resource set or PCI determined based on any of the ways described above. This association may be RRC configured or even provided as part of the specifications.

For the determination of which PUSCH transmission, or TCI state, to use for the PHR calculation on one cell, the terminal device may be specified or indicated or configured to follow the determination of which PUSCH transmission, or TCI state, to use for the PHR calculation on another cell, where this latter cell may be a reference cell used for common TCI state update (i.e., the TCI state indication on the one cell follows the TCI state indication on the reference cell). Note that the determination of which PUSCH transmission, or TCI state, to use for the PHR calculation on another cell may be based on any of the above embodiments.

In block 205, the terminal device reports, or transmits, the single PHR to the network node.

In block 206, the terminal device may transmit a second indication to the network node. The second indication may be provided by the terminal device to inform the network node about which uplink transmission has been used for generating the single PHR for the at least two simultaneous uplink transmissions. The second indication may indicate one or more of the following: the one uplink transmission used by the terminal device for generating the single PHR for the at least two simultaneous uplink transmissions, the rule used by the terminal device for determining the one uplink transmission, or the index or identifier associated with the one uplink transmission.

As used herein, "one or more of the following: <a list of two or more elements>" and "one or more of <a list of two or more elements>" and similar wording, where the list of two or more elements are joined by "and" or "or", mean at least any one of the elements, or at least any two or more of the elements, or at least all the elements.

The second indication may be provided, for example, in uplink control information (UCI) or UL MAC CE. For example, bit value '0' may indicate that one PUSCH transmission, such as the PUSCH transmission corresponding to CORESETPoolIndex 0 or lower/larger TCI state index or lower/larger SRS resource set index or lower/larger SRI, has been used for the PHR calculation. Bit value '1' may indicate that one PUSCH transmission, such as the PUSCH transmission corresponding to CORESETPoolIndex 1 or larger/smaller TCI state index or larger/smaller SRS resource set index or lower/larger SRI, has been used for the PHR calculation.

In block 207, the network node may schedule radio resources for the terminal device based on the received single PHR. The PHR may assist the UL scheduler at the network node, since the PHR indicates the power availability (or power headroom) for the terminal device. For instance, the PHR may help to avoid scheduling a higher data rate than the available transmission power can support. Herein a single PHR is provided for the at least two simultaneous uplink transmissions (e.g., due to two-PHR not being configured), and this PHR may correspond to, for example, a single panel/link/TRP/TCI state. Depending on the rule, this single PHR may be, for example, for the 'worse' radio link in terms of power/MCS/MPE, etc.

The second indication may also be used to assist the scheduling at the network node.

In other words, which uplink transmission to use for generating the single PHR may be left up to the implementation of the terminal device, or based on at least one of the above rules, and the terminal device may provide the second indication to the network to indicate which uplink transmission has been used for generating the PHR. For example, the second indication may comprise information representing which PUSCH transmission or, alternatively, which corresponding CORESETPoolIndex or capability value set index or CORESET group or TCI state or TCI state group or antenna panel identifier or TRP identifier or SRS resource set or SRI or PCI has been used for the PHR calculation.

When PHR is triggered on another cell, i.e., other than the given cell/CC, the operations described above may be used.

On the other hand, when two sets of PHR triggering conditions are defined in the cell/CC, where a given set may correspond to a CORESETPoolIndex or TRP or capability value set or antenna panel or TCI state or TCI state group or downlink reference signal group or SRS resource set or PCI, the following may be applied: 1) If two PHRs are triggered in the cell based on these conditions, the terminal device may report one of the PHRs based on the above proposed operations. 2) If only one PHR is triggered, this PHR may be calculated and reported, and the terminal device may provide an indication (i.e., the second indication) of which PUSCH transmission, or, alternatively, which corresponding CORESETPoolIndex or capability value set index or COERESET group or TCI state or TCI state group or panel ID or TRP ID or SRS resource set or SRI or PCI etc., has been used for the PHR calculation.

The operations described above may be used for single-DCI mode and/or multi-DCI modes. Under the single-DCI mode, the at least two UL transmissions (e.g., PUSCHs) may be scheduled by a same PDCCH/DCI, or they may be configured UL transmissions/PUSCHs (and potentially corresponding to a same configured-grant PUSCH configuration). Under the multi-DCI mode, a given UL transmission (e.g., PUSCH) may be scheduled by a different PDCCH/DCI, or the at least two UL transmissions / PUSCHs may be configured UL transmissions / PUSCHs (and potentially corresponding to different configured-grant PUSCH configurations), and the at least two UL transmissions / PUSCHs may be carrying different transport blocks (TBs).

It should be noted that in case of a reference UL/PUSCH transmission, the terminal device may report a virtual PHR.

It should also be noted that the association of UL/PUSCH transmission/resources to CORESETPoolIndex or SRS resource set or CORESET group or PCI, etc., may be done through the PDCCH used to schedule the PUSCH transmission or to (re)activate the configured-grant PUSCH (e.g., for configured grant Type 2); either through the CORESET used to send the PDCCH or though the SRI or SRS resource set indicator indicated in DCI or via the PCI associated to the TCI state corresponding to the PUSCH transmission. For configured grant PUSCH (e.g., for configured grant Type 1), this association may be provided as part of the configured grant configuration.

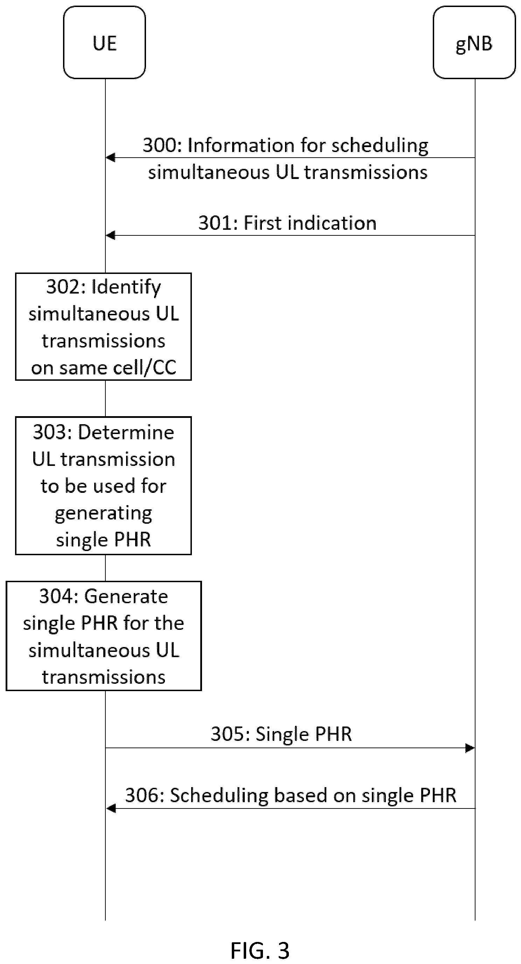

FIG. 3 illustrates a signaling diagram according to an example embodiment.

Referring to FIG. 3, in block 300, a network node (e.g., gNB) of a radio access network may transmit, to a terminal device, information for scheduling at least two simultaneous uplink transmissions from the terminal device, wherein the at least two simultaneous uplink transmissions are at least partially overlapping in time on a same cell or component carrier of the network node. Herein an uplink transmission may refer to, for example, a PUSCH transmission, a PUCCH transmission, or any other uplink transmission.

The terminal device may correspond to the UE 100 of FIG. 1A or FIG. 1B. The network node may correspond to the access node 104 of FIG. 1A or FIG. 1B.

In block 301, the network node may provide or transmit a first indication to the terminal device. The first indication may be provided by the network node to instruct the terminal device on which uplink transmission to use for generating a single PHR for the at least two simultaneous uplink transmissions. The first indication may indicate one or more of the following: one uplink transmission of the at least two simultaneous uplink transmissions to be used for generating a single power headroom report (PHR) for the at least two simultaneous uplink transmissions, a rule to be used for determining the one uplink transmission, or an index or identifier associated with the one uplink transmission.

For example, the first indication may be carried to the terminal device via RRC, MAC CE, and/or DCI, through existing/reserved or new field(s) or bit(s).

The index or identifier may relate to corresponding scheduling information of the one uplink transmission to be used for generating the single PHR. For example, the index or identifier may comprise one or more of the following: a control resource set (CORESET) pool index (CORESETPoolIndex), a capability value set index, a CORESET group index, a TCI state index, a TCI state, a TCI state group index, a pathloss reference signal index, a downlink reference signal group index, an antenna panel identifier, a transmission-reception point (TRP) identifier, a sounding reference signal (SRS) resource set index (or indicator), an SRS resource set, an SRS resource indicator (SRI), or a physical cell identity (PCI).

In block 302, the terminal device identifies or detects the at least two simultaneous uplink transmissions from the terminal device, wherein the at least two uplink transmissions are at least partially overlapping in time on a same cell or component carrier of the network node. In other words, the at least two uplink transmissions may be partially or fully overlapping in time.

In block 303, the terminal device determines the one uplink transmission of the at least two simultaneous uplink transmissions to be used for generating the single PHR for the at least two simultaneous uplink transmissions. The one uplink transmission may be determined as described above with reference to FIG. 2. For example, the one uplink transmission may be determined based on one of the rules described above. The rule may be indicated in the first indication, or the rule may be predefined (pre-configured) at the terminal device or provided as part of the specifications.

In block 304, the terminal device generates the single PHR for the at least two simultaneous uplink transmissions using the determined one uplink transmission of the at least two simultaneous uplink transmissions.

In block 305, the terminal device reports, or transmits, the single PHR to the network node.

In block 306, the network node may schedule radio resources for the terminal device based on the received single PHR.

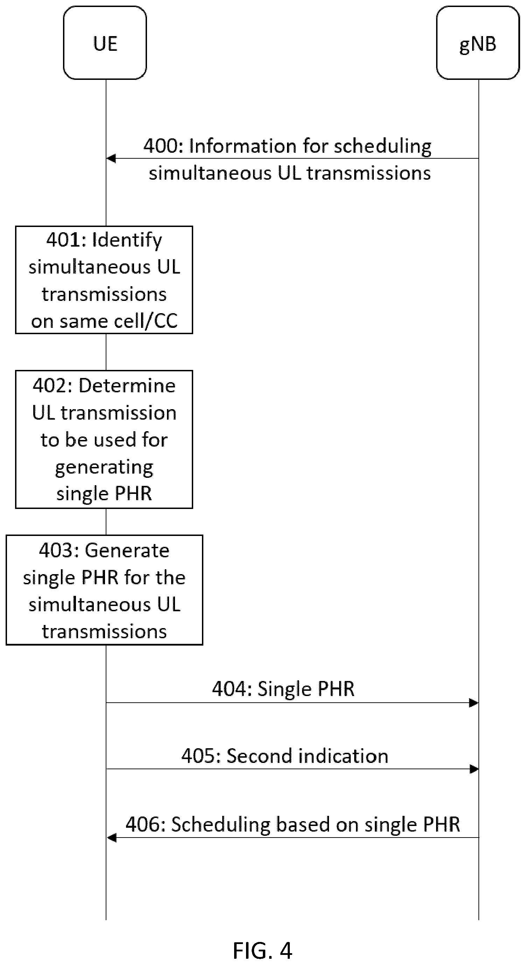

FIG. 4 illustrates a signaling diagram according to an example embodiment.

Referring to FIG. 4, in block 400, a network node (e.g., gNB) of a radio access network may transmit, to a terminal device, information for scheduling at least two simultaneous uplink transmissions from the terminal device, wherein the at least two simultaneous uplink transmissions are at least partially overlapping in time on a same cell or component carrier of the network node. Herein an uplink transmission may refer to, for example, a physical uplink shared channel (PUSCH) transmission, a physical uplink control channel (PUCCH) transmission, or any other uplink transmission.

The terminal device may correspond to the UE 100 of FIG. 1A or FIG. 1B. The network node may correspond to the access node 104 of FIG. 1A or FIG. 1B.

In block 401, the terminal device identifies or detects the at least two simultaneous uplink transmissions from the terminal device, wherein the at least two uplink transmissions are at least partially overlapping in time on a same cell or component carrier of the network node. In other words, the at least two uplink transmissions may be partially or fully overlapping in time.

In block 402, the terminal device determines one uplink transmission of the at least two simultaneous uplink transmissions to be used for generating a single PHR for the at least two simultaneous uplink transmissions.

In this example embodiment, the one uplink transmission may be determined autonomously by the terminal device based on its implementation. For example, the one uplink transmission may be determined based on one of the rules described above. In this example embodiment, the rule may be pre-defined (pre-configured) at the terminal device or provided as part of the specifications.

In block 403, the terminal device generates the single PHR for the at least two simultaneous uplink transmissions using the determined one uplink transmission of the at least two simultaneous uplink transmissions.

In block 404, the terminal device reports, or transmits, the single PHR to the network node.

In block 405, the terminal device may transmit an indication to the network node. This indication may be referred to as a second indication herein. The second indication may be provided by the terminal device to inform the network node about which uplink transmission has been used for generating the single PHR for the at least two simultaneous uplink transmissions. The second indication may indicate one or more of the following: the one uplink transmission used by the terminal device for generating the single PHR for the at least two simultaneous uplink transmissions, the rule used by the terminal device for determining the one uplink transmission, or the index or identifier associated with the one uplink transmission.

The second indication may be provided, for example, in uplink control information (UCI) or UL MAC CE. For example, bit value '0' may indicate that one PUSCH transmission, such as the PUSCH transmission corresponding to CORESETPoolIndex 0 or lower/larger TCI state index or lower/larger SRS resource set index or lower/larger SRI, has been used for the PHR calculation. Bit value '1' may indicate that one PUSCH transmission, such as the PUSCH transmission corresponding to CORESETPoolIndex 1 or larger/smaller TCI state index or larger/smaller SRS resource set index or lower/larger SRI, has been used for the PHR calculation.

In block 406, the network node may schedule radio resources for the terminal device based on the received single PHR.

The second indication may also be used to assist the scheduling at the network node.

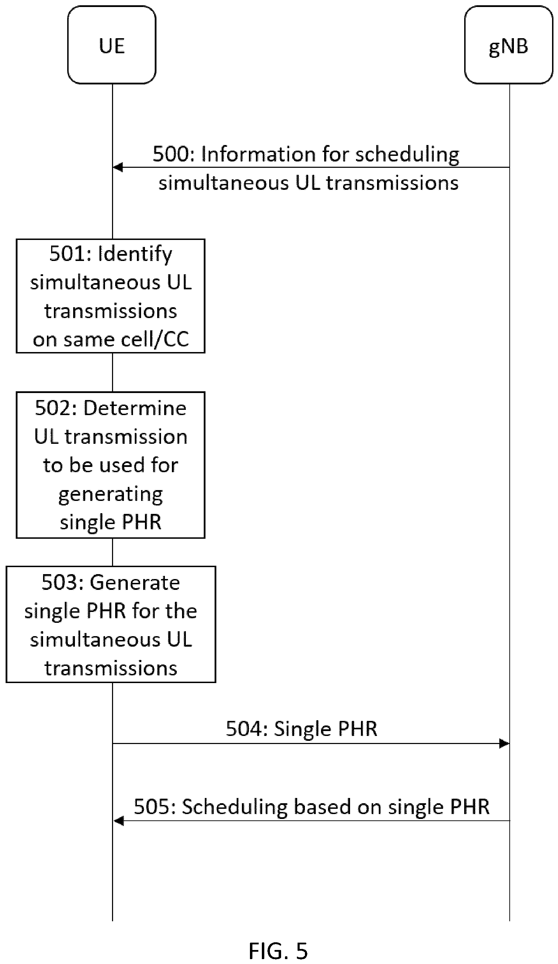

FIG. 5 illustrates a signaling diagram according to an example embodiment.

Referring to FIG. 5, in block 500, a network node (e.g., gNB) of a radio access network may transmit, to a terminal device, information for scheduling at least two simultaneous uplink transmissions from the terminal device, wherein the at least two simultaneous uplink transmissions are at least partially overlapping in time on a same cell or component carrier of the network node. Herein an uplink transmission may refer to, for example, a physical uplink shared channel (PUSCH) transmission, a physical uplink control channel (PUCCH) transmission, or any other uplink transmission.

The terminal device may correspond to the UE 100 of FIG. 1A or FIG. 1B. The network node may correspond to the access node 104 of FIG. 1A or FIG. 1B.

In block 501, the terminal device identifies or detects the at least two simultaneous uplink transmissions from the terminal device, wherein the at least two uplink transmissions are at least partially overlapping in time on a same cell or component carrier of the network node. In other words, the at least two uplink transmissions may be partially or fully overlapping in time.

In block 502, the terminal device determines one uplink transmission of the at least two simultaneous uplink transmissions to be used for generating a single PHR for the at least two simultaneous uplink transmissions. In this example embodiment, the one uplink transmission may be determined autonomously by the terminal device based on its implementation. For example, the one uplink transmission may be determined based on one of the rules described above. In this example embodiment, the rule may be pre-defined (pre-configured) at the terminal device or provided as part of the specifications.

In block 503, the terminal device generates the single PHR for the at least two simultaneous uplink transmissions using the determined one uplink transmission of the at least two simultaneous uplink transmissions.

In block 504, the terminal device reports, or transmits, the single PHR to the network node.

In block 505, the network node may schedule radio resources for the terminal device based on the received single PHR.

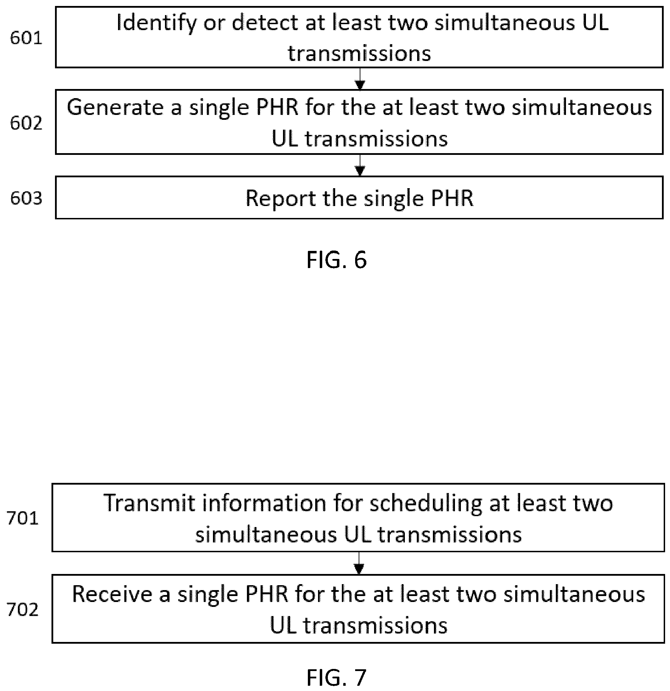

FIG. 6 illustrates a flow chart according to an example embodiment of a method performed by an apparatus. For example, the apparatus may be, or comprise, or be comprised in, a terminal device. The terminal device may also be called a subscriber unit, mobile station, remote terminal, access terminal, user terminal, user device, or user equipment (UE). The terminal device may correspond to the UE 100 of FIG. 1A or FIG. 1B.

Referring to FIG. 6, in block 601, the apparatus identifies or detects at least two simultaneous uplink transmissions from the apparatus, wherein the at least two simultaneous uplink transmissions are at least partially overlapping in time on a same cell or component carrier.

In block 602, the apparatus generates a single power headroom report (PHR) for the at least two simultaneous uplink transmissions using one uplink transmission of the at least two simultaneous uplink transmissions.

In block 603, the apparatus transmits the PHR to a network node. The single PHR may be reported on the same cell or component carrier, or on a different cell or component carrier.

FIG. 7 illustrates a flow chart according to an example embodiment of a method performed by an apparatus. For example, the apparatus may be, or comprise, or be comprised in, a network node of a radio access network. The network node may correspond to the access node 104 of FIG. 1A or FIG. 1B.

Referring to FIG. 7, in block 701, the apparatus transmits, to a terminal device, information for scheduling at least two simultaneous uplink transmissions from the terminal device, wherein the at least two simultaneous uplink transmissions are at least partially overlapping in time on a same cell or component carrier.

In block 702, the apparatus receives, from the terminal device, a single power headroom report (PHR) for the at least two simultaneous uplink transmissions, wherein the single PHR is generated by the terminal device using one uplink transmission of the at least two simultaneous uplink transmissions.

The blocks, related functions, and information exchanges (messages) described above by means of FIGS. 2-7 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information. For example, block 207 of FIG. 2, block 306 of FIG. 3, block 406 of FIG. 4, and block 505 of FIG. 5 may be left out in some embodiments.

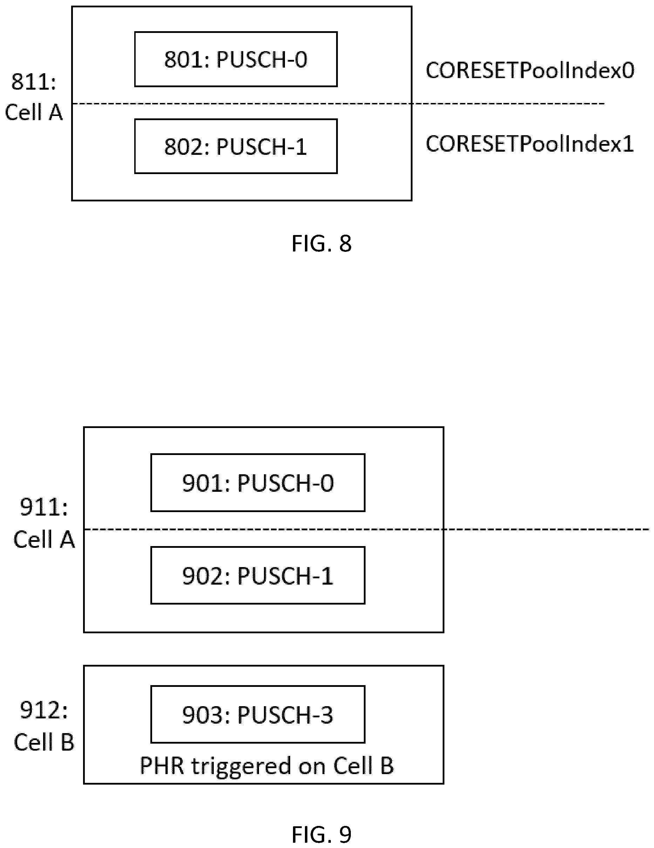

FIG. 8 illustrates an example of determining which uplink transmission to use for generating the single PHR (e.g., in block 203 of FIG. 2, block 303 of FIG. 3, block 402 of FIG. 4, or block 502 of FIG. 5). In this example, there are two simultaneous PUSCH transmissions 801, 802 (PUSCH-0, PUSCH-1) on the same cell 811 (cell A). The first PUSCH transmission 801 is associated with CORESETPoolIndex 0, and the second PUSCH transmission 802 is associated with CORESETPoolIndex 1. In this example, the rule indicates to use the PUSCH with the lower CORESETPoolIndex. Thus, the first PUSCH transmission 801 is used to generate the single PHR, since the first PUSCH transmission 801 corresponds to the lower CORESETPoolIndex (i.e., CORESETPoolIndex 0 < CORESETPoolIndex 1).

FIG. 9 illustrates an example of the terminal device indicating which uplink transmission has been used for generating the single PHR (e.g., in block 206 of FIG. 2, or block 405 of FIG. 4). In this example, there are two simultaneous PUSCH transmissions 901, 902 (PUSCH-0, PUSCH-1) on the same cell 911 (cell A), and another PUSCH transmission 903 (PUSCH-3) on a different cell 912 (cell B). In this example, for cell A, based on the terminal device implementation or one or more rules, the terminal device determines to use the second PUSCH transmission 902 for generating the single PHR. The terminal device provides an indication (i.e., the second indication) to the network regarding the use of the second PUSCH transmission 902 for generating the single PHR.

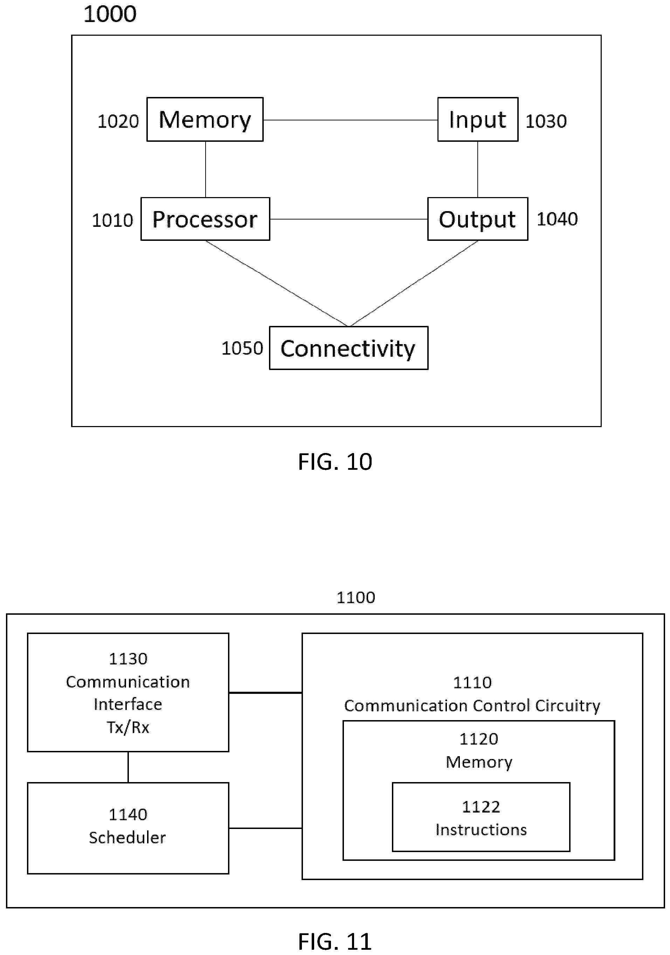

FIG. 10 illustrates an example of an apparatus 1000 comprising means for performing one or more of the example embodiments described above. For example, the apparatus 1000 may be an apparatus such as, or comprising, or comprised in, a terminal device. The terminal device may correspond to the UE 100 of FIG. 1A or FIG. 1B. The terminal device may also be called a subscriber unit, mobile station, remote terminal, access terminal, user terminal, user device, or user equipment (UE).

The apparatus 1000 may comprise a circuitry or a chipset applicable for realizing one or more of the example embodiments described above. For example, the apparatus 1000 may comprise at least one processor 1010. The at least one processor 1010 interprets instructions (e.g., computer program instructions) and processes data. The at least one processor 1010 may comprise one or more programmable processors. The at least one processor 1010 may comprise programmable hardware with embedded firmware and may, alternatively or additionally, comprise one or more application-specific integrated circuits (ASICs).

The at least one processor 1010 is coupled to at least one memory 1020. The at least one processor is configured to read and write data to and from the at least one memory 1020. The at least one memory 1020 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The at least one memory 1020 stores computer readable instructions that are executed by the at least one processor 1010 to perform one or more of the example embodiments described above. For example, non-volatile memory stores the computer readable instructions, and the at least one processor 1010 executes the instructions using volatile memory for temporary storage of data and/or instructions. The computer readable instructions may refer to computer program code.

The computer readable instructions may have been pre-stored to the at least one memory 1020 or, alternatively or additionally, they may be received, by the apparatus, via an electromagnetic carrier signal and/or may be copied from a physical entity such as a computer program product. Execution of the computer readable instructions by the at least one processor 1010 causes the apparatus 1000 to perform one or more of the example embodiments described above. That is, the at least one processor and the at least one memory storing the instructions may provide the means for providing or causing the performance of any of the methods and/or blocks described above.

In the context of this document, a "memory" or "computer-readable media" or "computer-readable medium" may be any non-transitory media or medium or means that can contain, store, communicate, propagate or transport the instructions for use by or in connection with an instruction execution system, apparatus, or device, such as a computer. The term "non-transitory," as used herein, is a limitation of the medium itself (i.e., tangible, not a signal) as opposed to a limitation on data storage persistency (e.g., RAM vs. ROM).

The apparatus 1000 may further comprise, or be connected to, an input unit 1030. The input unit 1030 may comprise one or more interfaces for receiving input. The one or more interfaces may comprise for example one or more temperature, motion and/or orientation sensors, one or more cameras, one or more accelerometers, one or more microphones, one or more buttons and/or one or more touch detection units. Further, the input unit 1030 may comprise an interface to which external devices may connect to.

The apparatus 1000 may also comprise an output unit 1040. The output unit may comprise or be connected to one or more displays capable of rendering visual content, such as a light emitting diode (LED) display, a liquid crystal display (LCD) and/or a liquid crystal on silicon (LCoS) display. The output unit 1040 may further comprise one or more audio outputs. The one or more audio outputs may be for example loudspeakers.

The apparatus 1000 further comprises a connectivity unit 1050. The connectivity unit 1050 enables wireless connectivity to one or more external devices. The connectivity unit 1050 comprises at least one transmitter and at least one receiver that may be integrated to the apparatus 1000 or that the apparatus 1000 may be connected to. The at least one transmitter comprises at least one transmission antenna, and the at least one receiver comprises at least one receiving antenna. The connectivity unit 1050 may comprise an integrated circuit or a set of integrated circuits that provide the wireless communication capability for the apparatus 1000. Alternatively, the wireless connectivity may be a hardwired application-specific integrated circuit (ASIC). The connectivity unit 1050 may also provide means for performing at least some of the blocks of one or more example embodiments described above. The connectivity unit 1050 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

It is to be noted that the apparatus 1000 may further comprise various components not illustrated in FIG. 10. The various components may be hardware components and/or software components.

FIG. 11 illustrates an example of an apparatus 1100 comprising means for performing one or more of the example embodiments described above. For example, the apparatus 1100 may be an apparatus such as, or comprising, or comprised in, a network node of a radio access network. The network element may correspond to the access node 104 of FIG. 1A or FIG. 1B. The network element may also be referred to, for example, as a network element, a radio access network (RAN) node, a next generation radio access network (NG-RAN) node, a NodeB, an eNB, a gNB, a base transceiver station (BTS), a base station, an NR base station, a 5G base station, an access node, an access point (AP), a relay node, a repeater, an integrated access and backhaul (IAB) node, an IAB donor node, a distributed unit (DU), a central unit (CU), a baseband unit (BBU), a radio unit (RU), a radio head, a remote radio head (RRH), or a transmission-reception point (TRP).

The apparatus 1100 may comprise, for example, a circuitry or a chipset applicable for realizing one or more of the example embodiments described above. The apparatus 1100 may be an electronic device comprising one or more electronic circuitries. The apparatus 1100 may comprise a communication control circuitry 1110 such as at least one processor, and at least one memory 1120 storing instructions 1122 which, when executed by the at least one processor, cause the apparatus 1100 to carry out one or more of the example embodiments described above. Such instructions 1122 may, for example, include a computer program code (software), wherein the at least one memory and the computer program code (software) are configured, with the at least one processor, to cause the apparatus 1100 to carry out one or more of the example embodiments described above. The at least one processor and the at least one memory storing the instructions may provide the means for providing or causing the performance of any of the methods and/or blocks described above.

The processor is coupled to the memory 1120. The processor is configured to read and write data to and from the memory 1120. The memory 1120 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1120 stores computer readable instructions that are executed by the processor. For example, non-volatile memory stores the computer readable instructions and the processor executes the instructions using volatile memory for temporary storage of data and/or instructions.

The computer readable instructions may have been pre-stored to the memory 1120 or, alternatively or additionally, they may be received, by the apparatus, via an electromagnetic carrier signal and/or may be copied from a physical entity such as a computer program product. Execution of the computer readable instructions causes the apparatus 1100 to perform one or more of the functionalities described above.

The memory 1120 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data. For example, the configuration database may store a current neighbour cell list, and, in some example embodiments, structures of the frames used in the detected neighbour cells.

The apparatus 1100 may further comprise a communication interface 1130 comprising hardware and/or software for realizing communication connectivity according to one or more communication protocols. The communication interface 1130 comprises at least one transmitter (Tx) and at least one receiver (Rx) that may be integrated to the apparatus 1100 or that the apparatus 1100 may be connected to. The communication interface 1130 may provide means for performing some of the blocks for one or more example embodiments described above. The communication interface 1130 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1130 provides the apparatus with radio communication capabilities to communicate in the cellular communication system. The communication interface may, for example, provide a radio interface to one or more user devices. The apparatus 1100 may further comprise another interface towards a core network such as the network coordinator apparatus or AMF, and/or to the access nodes of the cellular communication system.

The apparatus 1100 may further comprise a scheduler 1140 that is configured to allocate radio resources. The scheduler 1140 may be configured along with the communication control circuitry 1110 or it may be separately configured.

It is to be noted that the apparatus 1100 may further comprise various components not illustrated in FIG. 11. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, microcontrollers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways. The embodiments are not limited to the example embodiments described above, but may vary within the scope of the claims. Therefore, all words and expressions should be interpreted broadly, and they are intended to illustrate, not to restrict, the example embodiments.

## Claims

1. An apparatus comprising means for:

   identifying or detect at least two simultaneous uplink transmissions from the apparatus, wherein the at least two simultaneous uplink transmissions are at least partially overlapping in time on a same cell or component carrier;
   generating a single power headroom report, PHR, for the at least two simultaneous uplink transmissions using one uplink transmission of the at least two simultaneous uplink transmissions; and
   transmit, to a network node, the single PHR.

2. The apparatus of claim 1, further comprising means for:
   determining the one uplink transmission to be used for generating the single PHR based on an association of the one uplink transmission to an index or identifier.

3. The apparatus of any preceding claim, wherein the one uplink transmission to be used for generating the single PHR is determined based on a rule indicating one or more of the following:

   using the one uplink transmission based on the one uplink transmission being associated with a higher index or identifier than one or more indices or identifiers associated with one or more other uplink transmissions of the at least two simultaneous uplink transmissions;
   using the one uplink transmission based on the one uplink transmission being associated with a lower index or identifier than the one or more indices or identifiers associated with the one or more other uplink transmissions of the at least two simultaneous uplink transmissions;
   using the one uplink transmission based on the one uplink transmission being associated with a larger parameter than one or more parameters associated with the one or more other uplink transmissions of the at least two simultaneous uplink transmissions;
   using the one uplink transmission based on the one uplink transmission being associated with a smaller parameter than the one or more parameters associated with the one or more other uplink transmissions of the at least two simultaneous uplink transmissions;
   using the one uplink transmission based on the one uplink transmission being associated with an earlier starting time than one or more starting times associated with the one or more other uplink transmissions of the at least two simultaneous uplink transmissions;
   using the one uplink transmission based on the one uplink transmission being associated with a later starting time than the one or more starting times associated with the one or more other uplink transmissions of the at least two simultaneous uplink transmissions;
   using the one uplink transmission based on the one uplink transmission being associated with a larger power headroom value than one or more power headroom values associated with the one or more other uplink transmissions of the at least two simultaneous uplink transmissions;
   using the one uplink transmission based on the one uplink transmission being associated with a smaller power headroom value than the one or more power headroom values associated with the one or more other uplink transmissions of the at least two simultaneous uplink transmissions;
   using the one uplink transmission based on the one uplink transmission corresponding to a first indicated transmission configuration indicator, TCI, state of two indicated TCI states;
   using the one uplink transmission based on the one uplink transmission corresponding to a second indicated TCI state of the two indicated TCI states;

using the one uplink transmission based on the one uplink transmission corresponding to a TCI state corresponding to a lower index or identifier than one or more indices or identifiers corresponding to one or more other TCI states corresponding to the one or more other uplink transmissions of the at least two simultaneous uplink transmissions; or

using the one uplink transmission based on the one uplink transmission corresponding to a TCI state corresponding to a higher index or identifier than the one or more indices or identifiers corresponding to the one or more other TCI states corresponding to the one or more other uplink transmissions of the at least two simultaneous uplink transmissions.

4. The apparatus of claim 3, wherein the index or identifier associated with the one uplink transmission comprises one or more of the following:

a first control resource set, CORESET, pool index, a first capability value set index, a first CORESET group index, a first TCI state index, a first TCI state, a first TCI state group index, a first pathloss reference signal index, a first downlink reference signal group index, a first antenna panel identifier, a first transmission-reception point, TRP, identifier, a first sounding reference signal, SRS, resource set index, a first SRS resource set, a first SRS resource indicator, SRI, or a first physical cell identity, PCI,

wherein an index or identifier of the one or more indices or identifiers associated with the one or more other uplink transmissions comprises one or more of the following: a second CORESET pool index, a second capability value set index, a second CORESET group index, a second TCI state index, a second TCI state, a second TCI state group index, a second pathloss reference signal index, a second downlink reference signal group index, a second antenna panel identifier, a second TRP identifier, a second SRS resource set index, a second SRS resource set, a second SRI, or a second PCI.

5. The apparatus of any of claims 3-4, wherein the parameter associated with the one uplink transmission indicates one or more of the following: a first modulation coding scheme, MCS, a first frequency domain allocation, a first maximum power reduction, MPR, a first maximum permissible exposure, MPE, a first number of resource elements, or a first transmission power,

wherein a parameter of the one or more parameters associated with the one or more other uplink transmissions indicates one or more of the following: a second MCS, a second frequency domain allocation, a second MPR, a second MPE, a second number of resource elements, or a second transmission power.

6. The apparatus of any preceding claim, further comprising means for:
receiving a first indication indicating one or more of the following: the one uplink transmission to be used for generating the single PHR for the at least two simultaneous uplink transmissions, a rule to be used for determining the one uplink transmission, or an index or identifier associated with the one uplink transmission.

7. The apparatus of any preceding claim, further comprising means for:
transmitting a second indication indicating one or more of the following: the one uplink transmission used for generating the single PHR for the at least two simultaneous uplink transmissions, a rule used for determining the one uplink transmission, or an index or identifier associated with the one uplink transmission.

8. The apparatus of any preceding claim, wherein the single PHR is generated using one or more power control parameters associated with the one uplink transmission.

9. An apparatus comprising means for:

transmitting, to a terminal device, information for scheduling at least two simultaneous uplink transmissions from the terminal device, wherein the at least two simultaneous uplink transmissions are at least partially overlapping in time on a same cell or component carrier; and
receiving, from the terminal device, a power headroom report, PHR, for the at least two simultaneous uplink transmissions, wherein the single PHR is generated by the terminal device using one uplink transmission of the at least two simultaneous uplink transmissions.

10. The apparatus of claim 9, wherein the one uplink transmission of the at least two simultaneous uplink transmissions is determined by the terminal device based on an association of the one uplink transmission to an index or identifier.

11. The apparatus of any of claims 9-10, further comprising means for:
transmitting, to the terminal device, a first indication indicating one or more of the following: the one uplink transmission to be used for generating the single PHR for the at least two simultaneous uplink transmissions, a rule to be used for determining the one uplink transmission, or an index or identifier associated with the one uplink transmission.

**12.** The apparatus of any of claims 9-11, further comprising means for:

receiving, from the terminal device, a second indication indicating one or more of the following: the one uplink transmission used for generating the single PHR for the at least two simultaneous uplink transmissions, a rule used for determining the one uplink transmission, or an index or identifier associated with the one uplink transmission.

**13.** The apparatus of any of claims 11-12, wherein the rule indicates one or more of the following:

using the one uplink transmission based on the one uplink transmission being associated with a higher index or identifier than one or more indices or identifiers associated with one or more other uplink transmissions of the at least two simultaneous uplink transmissions;
using the one uplink transmission based on the one uplink transmission being associated with a lower index or identifier than the one or more indices or identifiers associated with the one or more other uplink transmissions of the at least two simultaneous uplink transmissions;
using the one uplink transmission based on the one uplink transmission being associated with a larger parameter than one or more parameters associated with the one or more other uplink transmissions of the at least two simultaneous uplink transmissions;
using the one uplink transmission based on the one uplink transmission being associated with a smaller parameter than the one or more parameters associated with the one or more other uplink transmissions of the at least two simultaneous uplink transmissions;
using the one uplink transmission based on the one uplink transmission being associated with an earlier starting time than one or more starting times associated with the one or more other uplink transmissions of the at least two simultaneous uplink transmissions;
using the one uplink transmission based on the one uplink transmission being associated with a later starting time than the one or more starting times associated with the one or more other uplink transmissions of the at least two simultaneous uplink transmissions;
using the one uplink transmission based on the one uplink transmission being associated with a larger power headroom value than one or more power headroom values associated with the one or more other uplink transmissions of the at least two simultaneous uplink transmissions;
using the one uplink transmission based on the one uplink transmission being associated with a smaller power headroom value than the one or more power headroom values associated with the one or more other uplink transmissions of the at least two simultaneous uplink transmissions;
using the one uplink transmission based on the one uplink transmission corresponding to a first indicated transmission configuration indicator (TCI) state of two indicated TCI states;
using the one uplink transmission based on the one uplink transmission corresponding to a second indicated TCI state of the two indicated TCI states;
using the one uplink transmission based on the one uplink transmission corresponding to a TCI state corresponding to a lower index or identifier than one or more indices or identifiers corresponding to one or more other TCI states corresponding to the one or more other uplink transmissions of the at least two simultaneous uplink transmissions; or
using the one uplink transmission based on the one uplink transmission corresponding to a TCI state corresponding to a higher index or identifier than the one or more indices or identifiers corresponding to the one or more other TCI states corresponding to the one or more other uplink transmissions of the at least two simultaneous uplink transmissions.

**14.** The apparatus of claim 13, wherein the index or identifier associated with the one uplink transmission comprises one or more of the following:

a first control resource set, CORESET, pool index, a first capability value set index, a first CORESET group index, a first TCI state index, a first TCI state, a first TCI state group index, a first pathloss reference signal index, a first downlink reference signal group index, a first antenna panel identifier, a first transmission-reception point, TRP, identifier, a first sounding reference signal, SRS, resource set index, a first SRS resource set, a first SRS resource indicator, SRI, or a first physical cell identity, PCI,
wherein an index or identifier of the one or more indices or identifiers associated with the one or more other uplink transmissions comprises one or more of the following: a second CORESET pool index, a second capability value set index, a second CORESET group index, a second TCI state index, a second TCI state, a second TCI state group index, a second pathloss reference signal index, a second downlink reference signal group index, a second antenna panel identifier, a second TRP identifier, a second SRS resource set index, a second SRS resource set, a second SRI, or a second PCI.

15. A method comprising:

identifying or detecting, by a terminal device, at least two simultaneous uplink transmissions from the terminal device, wherein the at least two simultaneous uplink transmissions are at least partially overlapping in time on a same cell or component carrier;
generating, by the terminal device, a single power headroom report (PHR) for the at least two simultaneous uplink transmissions using one uplink transmission of the at least two simultaneous uplink transmissions; and

transmitting, by the terminal device and to a network node, the single PHR.

FIG. 1A

FIG. 1B

UE

gNB

200: Information for scheduling
simultaneous UL transmissions

201: First indication

202: Identify
simultaneous UL
transmissions
on same cell/CC

203: Determine
UL transmission
to be used for
generating
single PHR

204: Generate
single PHR for the
simultaneous UL
transmissions

205: Single PHR

206: Second indication

207: Scheduling based on single PHR

FIG. 2

```
      ┌──────┐                              ┌──────┐
      │  UE  │                              │ gNB  │
      └──────┘                              └──────┘
         │                                     │
         │   300: Information for scheduling    │
         │◄────────────────────────────────────│
         │     simultaneous UL transmissions    │
         │                                     │
         │         301: First indication        │
         │◄────────────────────────────────────│
         │                                     │
  ┌──────────────┐                             │
  │ 302: Identify │                            │
  │ simultaneous UL│                           │
  │ transmissions │                            │
  │ on same cell/CC│                           │
  └──────────────┘                             │
         │                                     │
  ┌──────────────┐                             │
  │ 303: Determine│                            │
  │ UL transmission│                           │
  │ to be used for │                           │
  │  generating    │                           │
  │  single PHR    │                           │
  └──────────────┘                             │
         │                                     │
  ┌──────────────┐                             │
  │ 304: Generate │                            │
  │ single PHR for the│                        │
  │ simultaneous UL │                          │
  │ transmissions  │                           │
  └──────────────┘                             │
         │                                     │
         │         305: Single PHR              │
         │────────────────────────────────────►│
         │                                     │
         │   306: Scheduling based on single PHR │
         │◄────────────────────────────────────│
         │                                     │
```

FIG. 3

FIG. 4

**500: Information for scheduling simultaneous UL transmissions**

**501: Identify simultaneous UL transmissions on same cell/CC**

**502: Determine UL transmission to be used for generating single PHR**

**503: Generate single PHR for the simultaneous UL transmissions**

**504: Single PHR**

**505: Scheduling based on single PHR**

FIG. 5

601 | Identify or detect at least two simultaneous UL transmissions

602 | Generate a single PHR for the at least two simultaneous UL transmissions

603 | Report the single PHR

FIG. 6

701 | Transmit information for scheduling at least two simultaneous UL transmissions

702 | Receive a single PHR for the at least two simultaneous UL transmissions

FIG. 7

811:
Cell A

801: PUSCH-0

CORESETPoolIndex0

802: PUSCH-1

CORESETPoolIndex1

FIG. 8

911:
Cell A

901: PUSCH-0

902: PUSCH-1

912:
Cell B

903: PUSCH-3

PHR triggered on Cell B

FIG. 9

1000

FIG. 10

1100

FIG. 11

Europäisches
Patentamt

European
Patent Office

Office européen
des brevets

# EUROPEAN SEARCH REPORT

Application Number

EP 23 19 8157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/100194 A1 (NANGIA VIJAY [US] ET AL) 26 March 2020 (2020-03-26) * paragraphs [0057] – [0058] * ----- | 1-15 | INV. H04W52/14 H04W52/36 |
| X | CN 111 901 021 A (ZTE CORP) 6 November 2020 (2020-11-06) * paragraphs [0195] – [0204] * ----- | 1-15 | |
| X | CN 102 687 577 B (PANASONIC INTELLECTUAL PROPERTY CORP OF AME) 17 June 2015 (2015-06-17) * paragraph [0382] * ----- | 1-15 | |

| | | | TECHNICAL FIELDS SEARCHED (IPC) |
|---|---|---|---|
| | | | H04W |

The present search report has been drawn up for all claims

| Place of search | Date of completion of the search | Examiner |
|---|---|---|
| The Hague | 27 February 2024 | Lustrini, Donato |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 8157

27-02-2024

| Patent document cited in search report | | | Publication date | Patent family member(s) | | | Publication date |
|---|---|---|---|---|---|---|---|
| US 2020100194 | A1 | | 26-03-2020 | CN | 112740766 | A | 30-04-2021 |
| | | | | EP | 3857992 | A1 | 04-08-2021 |
| | | | | US | 2020100194 | A1 | 26-03-2020 |
| | | | | US | 2022248345 | A1 | 04-08-2022 |
| | | | | WO | 2020065394 | A1 | 02-04-2020 |
| CN 111901021 | A | | 06-11-2020 | BR | 112022016229 | A2 | 11-10-2022 |
| | | | | CN | 111901021 | A | 06-11-2020 |
| | | | | EP | 4092921 | A1 | 23-11-2022 |
| | | | | KR | 20220141831 | A | 20-10-2022 |
| | | | | US | 2023110740 | A1 | 13-04-2023 |
| | | | | WO | 2021164634 | A1 | 26-08-2021 |
| CN 102687577 | B | | 17-06-2015 | AU | 2010311871 | A1 | 24-05-2012 |
| | | | | BR | 112012010022 | A2 | 05-09-2017 |
| | | | | CN | 102687577 | A | 19-09-2012 |
| | | | | CY | 1120914 | T1 | 29-05-2020 |
| | | | | DK | 2497318 | T3 | 08-10-2018 |
| | | | | EP | 2317815 | A1 | 04-05-2011 |
| | | | | EP | 2317816 | A1 | 04-05-2011 |
| | | | | EP | 2497318 | A1 | 12-09-2012 |
| | | | | EP | 3383114 | A1 | 03-10-2018 |
| | | | | EP | 3592080 | A1 | 08-01-2020 |
| | | | | EP | 4124125 | A1 | 25-01-2023 |
| | | | | ES | 2688231 | T3 | 31-10-2018 |
| | | | | HR | P20181486 | T1 | 16-11-2018 |
| | | | | HU | E039501 | T2 | 28-01-2019 |
| | | | | JP | 5702793 | B2 | 15-04-2015 |
| | | | | JP | 5902839 | B2 | 13-04-2016 |
| | | | | JP | 6145902 | B2 | 14-06-2017 |
| | | | | JP | 6350840 | B2 | 04-07-2018 |
| | | | | JP | 6478135 | B2 | 06-03-2019 |
| | | | | JP | 6628067 | B2 | 08-01-2020 |
| | | | | JP | 2013509759 | A | 14-03-2013 |
| | | | | JP | 2015144448 | A | 06-08-2015 |
| | | | | JP | 2016158252 | A | 01-09-2016 |
| | | | | JP | 2017169212 | A | 21-09-2017 |
| | | | | JP | 2018143001 | A | 13-09-2018 |
| | | | | JP | 2019092184 | A | 13-06-2019 |
| | | | | KR | 20120093913 | A | 23-08-2012 |
| | | | | LT | 2497318 | T | 10-09-2018 |
| | | | | PL | 2497318 | T3 | 30-11-2018 |
| | | | | PT | 2497318 | T | 22-10-2018 |
| | | | | RU | 2562612 | C1 | 10-09-2015 |
| | | | | RU | 2012117776 | A | 10-12-2013 |
| | | | | SI | 2497318 | T1 | 30-10-2018 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 19 8157

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2024

| Patent document cited in search report | Publication date | Patent family member(s) | | Publication date |
|---|---|---|---|---|
| | | US | 2012224552 A1 | 06-09-2012 |
| | | US | 2014307681 A1 | 16-10-2014 |
| | | US | 2016021624 A1 | 21-01-2016 |
| | | US | 2017064649 A1 | 02-03-2017 |
| | | US | 2018007642 A1 | 04-01-2018 |
| | | US | 2019200304 A1 | 27-06-2019 |
| | | US | 2020359340 A1 | 12-11-2020 |
| | | US | 2022256480 A1 | 11-08-2022 |
| | | WO | 2011050921 A1 | 05-05-2011 |

EPO FORM P0459

For more details about this annex : see Official Journal of the European Patent Office, No. 12/82